# EUROPEAN PATENT APPLICATION

(11) **EP 4 815 235 A1**
(43) Date of publication of application: **30.09.2026**
(21) Application number: 25819226.9
(22) Date of filing: 05.06.2025
(51) Int. Cl.: H02H 7/22, H02H 7/26, H02H 5/00, H02H 5/04, H02H 1/00

(54) **WIRE PROTECTION METHOD AND APPARATUS, AND ELECTRONIC DEVICE, STORAGE MEDIUM AND VEHICLE**

(30) Priority: 07.06.2024 CN 202410739503
(71) Applicant: Chongqing Changan Technology Co., Ltd., Chongqing 401135 (CN)
(72) Inventor: YIN, Haohua, Chongqing 401135 (CN)
(74) Representative: Skov, Anders
(86) International application number: PCT/CN2025/099432
(87) International publication number: WO 2025/252178

(57) **Abstract**

The present invention relates to the technical field of vehicles. Provided are a wire protection method and apparatus, and an electronic device, a storage medium and a vehicle. The method comprises: for any wire to be monitored, acquiring a current value of the wire to be monitored within a present measurement period, and using same to as a target current value; on the basis of the target current value and a preset smoking risk function, generating a smoking risk value of the wire to be monitored within the measurement period, wherein the smoking risk function is obtained on the basis of the fitting of test current values of different wires and smoking risk test values corresponding to the test current values, each smoking risk test value being determined on the basis of a smoking time, which is the time elapsed before a smoking event occurs on a wire with a current of the test current value passing through; on the basis of the smoking risk value within the measurement period and a historical risk value, determining a total risk value of the wire to be monitored; and if the total risk value meets a preset value requirement, executing a power cut-off operation on the wire to be monitored. In this way, the space in a vehicle body can be saved on, and the manufacturing costs for a vehicle can be reduced.

## Description

### CROSS-REFERENCE TO RELATED APPLICATIONS

The present application is the international patent application of the Chinese Patent Application No. 202410739503.4, filed on June 7, 2024, the entire contents of which are incorporated herein by reference.

### TECHNICAL FIELD

The present invention relates to the field of vehicle technology, and specifically, to a method and device for protecting a wire, an electronic device, a storage medium, and a vehicle.

### BACKGROUND OF THE INVENTION

Currently, as vehicles develop toward electrification, intelligence, and networking, wire harnesses, as key parts in vehicles, have been widely used in vehicles. For example, parts such as cameras, headlights, air conditioners, and radars in vehicles are all connected to a power source via wire harnesses. Without wire harnesses, currents cannot reach various electrical parts in the vehicle, which in turn renders these electrical parts in the vehicle unable to operate normally. As for wires in a wire harness, when the current passing through the wire is excessively high during use, the insulation layer on the surface of the wire may begin to heat up until a smoking event occurs, that is, the wire smokes and catches fire.

In the related art, a current fuse or a thermal fuse is usually added to a wire. When the current passing through the current fuse exceeds a rated current, the current fuse blows; or when the temperature sensed by the thermal fuse exceeds a rated temperature, the thermal fuse blows. This prevents the wire from smoking and catching fire, thereby achieving overcurrent protection for the wire. However, in this approach, the provided fuse occupies space in the vehicle body and increases the manufacturing cost of the vehicle.

### SUMMARY OF THE INVENTION

A first objective of the present invention is to provide a method for protecting a wire, to resolve the problems in the related art that in a method for protecting a wire, space in the vehicle body is occupied and the manufacturing cost of the vehicle is increased. A second objective is to provide a device for protecting a wire. A third objective is to provide an electronic device. A fourth objective is to provide a storage medium. A fifth objective is to provide a vehicle.

To achieve the foregoing objectives, the technical solutions adopted in the present invention are as follows.

In a first aspect, an embodiment of the present invention provides a method for protecting a wire. The method is applied to any wire protection component and includes:
obtaining, for any wire to be monitored, a current value of the wire to be monitored within a current detection cycle as a target current value;
generating, based on the target current value and a preset smoking risk function, a smoking risk value of the wire to be monitored within the detection cycle, where the smoking risk function is obtained by fitting based on test current values of different wires and corresponding smoking risk test values, each of the smoking risk test values is determined based on a smoking time, and the smoking time is a time needed for a smoking event to occur in a case where a current of the test current value passes through the wire;
determining, based on the smoking risk value within the detection cycle and a historical risk value, a total risk value of the wire to be monitored, where the historical risk value includes a smoking risk value of the wire to be monitored within a detection cycle prior to the detection cycle; and
performing a power-off operation on the wire to be monitored in a case where the total risk value meets a preset value requirement.

In a second aspect, an embodiment of the present invention provides a device for protecting a wire. The device is applied to any wire protection component and includes:
a first obtaining module, configured to obtain, for any wire to be monitored, a current value of the wire to be monitored within a current detection cycle as a target current value;
a first generation module, configured to generate, based on the target current value and a preset smoking risk function, a smoking risk value of the wire to be monitored within the detection cycle, where the smoking risk function is obtained by fitting based on test current values of different wires and corresponding smoking risk test values, each of the smoking risk test values is determined based on a smoking time, and the smoking time is a time needed for a smoking event to occur in a case where a current of the test current value passes through the wire;
a first determination module, configured to determine, based on the smoking risk value within the detection cycle and a historical risk value, a total risk value of the wire to be monitored, where the historical risk value includes a smoking risk value of the wire to be monitored within a detection cycle prior to the detection cycle; and
a power-off module, configured to perform a power-off operation on the wire to be monitored in a case where the total risk value meets a preset value requirement.

In a third aspect, an embodiment of the present invention provides an electronic device. The electronic device includes a processor and a memory. The memory stores a program or instructions runnable on the processor. The program or instructions, when executed by the processor, implement the steps of the method according to the first aspect.

In a fourth aspect, an embodiment of the present invention provides a storage medium. Instructions in the storage medium, when executed by a processor of an electronic device, cause the electronic device to perform the method according to the first aspect.

In a fifth aspect, an embodiment of the present invention provides a vehicle. The vehicle includes the device according to the second aspect and is configured to perform the method according to the first aspect.

The beneficial effects of the present invention are as follows.

In the method for protecting the wire in the embodiments of the present invention, for any wire to be monitored, a current value of the wire to be monitored within a current detection cycle is obtained as a target current value. Then, a smoking risk value of the wire to be monitored within the detection cycle is generated based on the target current value and a preset smoking risk function. The smoking risk function is obtained by fitting based on test current values of different wires and corresponding smoking risk test values. Each of the smoking risk test values is determined based on a smoking time, and the smoking time is a time needed for a smoking event to occur in a case where a current of the test current value passes through the wire. A total risk value of the wire to be monitored is determined based on the smoking risk value within the detection cycle and a historical risk value. The historical risk value includes a smoking risk value of the wire to be monitored within a detection cycle prior to the detection cycle. A power-off operation is performed on the wire to be monitored in a case where the total risk value meets a preset value requirement. In this way, it is estimated, based on the preset smoking risk function, whether the total risk value of the wire to be monitored meets the preset value requirement, and the power-off operation is performed on the wire to be monitored in a case where the preset value requirement is met. Since protection for a wire may be achieved without arranging a fuse, the space in the vehicle body may be saved, and the manufacturing cost of the vehicle may be reduced.

In addition, since the smoking risk function is obtained by fitting based on the test current values actually passing through the wires and the smoking risk test values determined from the time needed for the smoking event of the wires to actually occur, it may be ensured that the smoking risk value determined using the smoking risk function may accurately represent a risk probability of the smoking event occurring, and thereby it may be ensured that subsequently the power-off operation may be performed on the wire to be monitored in time, which avoids the problem that the wire to be monitored smokes and catches fire.

### BRIEF DESCRIPTION OF DRAWINGS

FIG. 1 is a flowchart of steps of a method for protecting a wire provided by an embodiment of the present invention.
FIG. 2 is a schematic diagram of processing a smoking risk value provided by an embodiment of the present invention.
FIG. 3 is a schematic diagram of curves corresponding to raw data points provided by an embodiment of the present invention.
FIG. 4 is a comparison diagram of data provided by an embodiment of the present invention.
FIG. 5 is a schematic diagram of obtaining data provided by an embodiment of the present invention.
FIG. 6 is a schematic diagram of wire protection provided by an embodiment of the present invention.
FIG. 7 is a schematic diagram of a structure of a device for protecting a wire according to an embodiment of the present invention.
FIG. 8 is a schematic diagram of a structure of an electronic device according to an embodiment of the present invention.

### DETAILED DESCRIPTION OF THE INVENTION

Implementations of the present invention are described below with reference to the drawings and preferred embodiments, and those skilled in the art may easily understand other advantages and effects of the present invention by the content disclosed in this specification. The present invention may also be implemented or applied by other different specific implementations, and various modifications or changes may also be made to various details in this specification based on different views and applications without departing from the spirit of the present invention. It is to be understood that preferred embodiments are merely for describing the present invention, but are not intended to limit the scope of protection of the present invention.

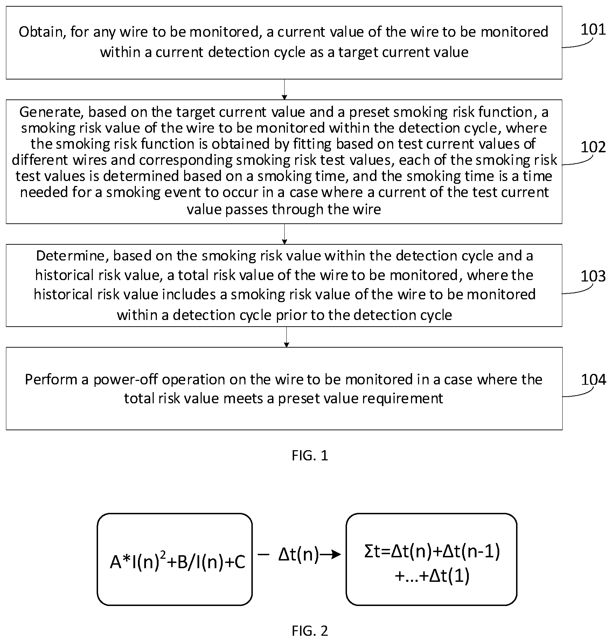

FIG. 1 is a flowchart of steps of a method for protecting a wire provided by an embodiment of the present invention. As shown in FIG. 1, the method includes the following steps 101 to 104.

In step 101, for any wire to be monitored, a current value of the wire to be monitored within a current detection cycle is obtained as a target current value.

In the embodiments of the present invention, the method for protecting the wire may be applied to any wire protection component in a vehicle. The wire protection component may be a processor having a software code execution capability. For example, the wire protection component may be a target Vehicle Information Unit 1 (VIU) in the vehicle. The target VIU may be a VIU having a wire protection function. For example, in a case where a VIU needs to be used as the target VIU, a software code file configured to implement the method for protecting the wire provided by the embodiments of the present invention may be preconfigured in the VIU to add the wire protection function to the VIU, such that the VIU may perform the method for protecting the wire. In this way, in combination with a smoking risk function obtained by function fitting, the wire protection function may be implemented in a form of software. Specifically, the target VIU may be arranged in accordance with an actual requirement, and the target VIU may be all or part of VIUs in the vehicle, which is not limited in the embodiments of the present invention. A wire that requires wire protection may be taken as the wire to be monitored. The wire to be monitored may be all or part of wires in the vehicle. For example, a wire that needs to be monitored may be assigned to the target VIU. Correspondingly, the wire assigned to the target VIU is the wire to be monitored. For example, a wire Identity (ID) of the wire to be monitored may be configured in the target VIU, to assign a wire that needs to be monitored to the target VIU. For example, three target VIUs, i.e., VIU 1, VIU 2, and VIU 3, may be arranged, and 70 wires to be monitored may be arranged. Wire IDs of the 70 wires are wire ID 1 to wire ID 70. The wires to be monitored may be assigned to the target VIUs in a preset assignment manner. For example, the preset assignment manner may be random assignment, or the preset assignment manner may be assignment according to usage, which is not limited in the embodiments of the present invention. Taking assignment according to usage as an example, wires for supplying power to interfaces such as a water pump, a USB power port, and a dashboard may be assigned to the same target VIU, for example, assigned to VIU 1. Wires for supplying power to interfaces such as a radar, an ambient light, a rearview mirror, and a center console display may be assigned to the same target VIU, for example, assigned to VIU 2. Wires for supplying power to interfaces such as a rear light controller and a rear ultrasonic radar may be assigned to the same target VIU, for example, assigned to VIU 3.

The detection cycle may be preset according to an actual situation. For example, the detection cycle may be 500 milliseconds, 800 milliseconds, 1 second, or the like. In the embodiments of the present invention, in a case where one detection cycle is reached each time, a current value of the wire to be monitored within the currently reached detection cycle may be obtained once to obtain the target current value. For example, as circuit board hardware on which the software runs, the target VIU may collect related information of wires at different positions of the vehicle body. Specifically, for any target VIU, in a case where the current detection cycle is reached, a current value of a wire to be monitored corresponding to each wire ID within the detection cycle may be obtained according to the configured wire IDs as the target current value. For example, the detection cycle is 500 milliseconds, and the wire IDs assigned to VIU 1 are wire ID 1 to wire ID 30. For every interval of 500 milliseconds, it may be considered that one detection cycle is reached. Assuming that a time interval between the current moment and a previous time of obtaining the target current value reaches 500 milliseconds, current data actively sent by a current sensor may be obtained. The current data may include current values corresponding to wire IDs of wire ID 1 to wire ID 30, and thereby current values of wire 1 to be monitored, wire 2 to be monitored, ..., wire 30 to be monitored within the current detection cycle are obtained. Alternatively, the current values corresponding to the wire IDs of wire ID 1 to wire ID 30 detected by the current sensor may be actively obtained, which is not limited in the embodiments of the present invention. The current sensor may be located in a VIU chip, or may be located in another position, provided that it is ensured that the current values of the wires to be monitored may be detected, which is not limited in the embodiments of the present invention. After the target current values are obtained, these target current values may be packaged and sent to the part responsible for computation in the VIU to perform subsequent operations. In the embodiments of the present invention, the wire IDs of the wires to be monitored assigned to the target VIU are configured in the target VIU. The target VIU obtains the target current values based on the configured wire IDs, and performs subsequent operations. That is, the target VIU identifies, based on the configured wire IDs, the wires to be monitored. In this way, when the wires to be monitored are subsequently adjusted, for example, a new wire to be monitored is added, or an existing wire to be monitored is deleted, it is merely necessary to correspondingly adjust the wire IDs configured in the target VIU without affecting the wire protection function.

In step 102, a smoking risk value of the wire to be monitored within the detection cycle is generated based on the target current value and a preset smoking risk function. The smoking risk function is obtained by fitting based on test current values of different wires and corresponding smoking risk test values, each of the smoking risk test values is determined based on a smoking time, and the smoking time is a time needed for a smoking event to occur in a case where a current of the test current value passes through the wire.

In the embodiments of the present invention, the test current values may be current values of test currents used to collect data points for fitting the smoking risk function. Wires with different wire gauges may be selected, and corresponding smoking risk values when currents of different test current values pass through these wires are determined as smoking risk test values corresponding to the different test current values. For example, currents of the test current values may pass through these wires, and the smoking time corresponding to each wire in a case where the current of the test current value is supplied is calculated. The smoking time may represent an actual time needed for the smoking event to occur when the current of the test current value passes through the wire. A longer smoking time indicates a usually relatively low probability of the smoking event occurring, and a shorter smoking time indicates a usually relatively high probability of the smoking event occurring. Therefore, a value for representing the probability of the smoking event occurring may be determined based on the smoking time to obtain the smoking risk value. The smoking risk value calculated for fitting the smoking risk function may be referred to as the smoking risk test value. Taking a test current value of 800 A as an example, a current of 800 A may be continuously supplied to the wire, and timing is started. When a problem that the wire smokes and catches fire occurs, a time interval between the moment at which the current starts to be supplied and the current moment is determined as a smoking time corresponding to the wire in a case where the current of the current value of 800 A is supplied. Correspondingly, the current value of 800 A and the smoking time corresponding to the current value of 800 A may be used as a data point. A plurality of data points may be collected by testing different wires a plurality of times using different current values. The smoking time in the data point may be converted into a value that may represent a probability of the smoking event occurring, to obtain a smoking risk test value of the data point. Function fitting is performed based on the current values in the data points and the smoking risk test values of the data point to obtain the smoking risk function.

Further, an input of the smoking risk function may include the current value, and an output of the smoking risk function may be the smoking risk value. The smoking risk value, which is generated by the smoking risk function, of the wire to be monitored within the current detection cycle may represent a relative risk probability of the smoking event occurring within the detection cycle. The smoking risk function is obtained by fitting based on the test current values actually passing through the wires and the smoking risk test values determined from the time needed for the smoking event of the wires to actually occur. Therefore, the smoking risk value finally output by the smoking risk function may accurately represent a risk probability of the smoking event occurring, thereby ensuring that the smoking risk value output by the smoking risk function according to the target current value is related to the smoking time for the smoking event to actually occur when the current of the target current value passes through the wire to be monitored. The smoking risk value may appropriately and accurately represent the probability of the smoking event of the wire to be monitored occurring within the current detection cycle. A larger smoking risk value indicates a higher relative risk of the smoking event occurring and a higher probability of the smoking event occurring. Conversely, a smaller smoking risk value indicates a lower relative risk of the smoking event occurring and a lower probability of the smoking event occurring.

In step 103, a total risk value of the wire to be monitored is determined based on the smoking risk value within the detection cycle and a historical risk value. The historical risk value includes a smoking risk value of the wire to be monitored within a detection cycle prior to the detection cycle.

In the embodiments of the present invention, the current detection cycle may be the first detection cycle in a measurement process, or may be a non-first detection cycle in the measurement process. In a case where the current detection cycle is the first detection cycle, it indicates that there is no detection cycle prior to the current detection cycle, that is, there is no historical risk value. Correspondingly, the smoking risk value within the current detection cycle may be directly determined as the total risk value of the wire to be monitored. Conversely, in a case where the current detection cycle is not the first detection cycle, it indicates that there is a detection cycle prior to the current detection cycle, that is, there is a historical detection cycle. Correspondingly, there is a historical risk value. Therefore, a smoking risk value generated previously for each historical detection cycle based on the smoking risk function may be loaded as the historical risk value. The total risk value of the wire to be monitored is determined based on the smoking risk value within the current detection cycle and the historical risk value.

Optionally, in an implementation, the step of determining the total risk value of the wire to be monitored based on the smoking risk value within the detection cycle and the historical risk value may specifically include the following steps. A sum of the smoking risk value within the detection cycle and all historical risk values is calculated. The sum is determined as the total risk value of the wire to be monitored.

In a case where the current detection cycle is the first detection cycle, it indicates that there is currently no detection cycle prior to the detection cycle, that is, there is no historical risk value, and the historical risk value is 0. Therefore, the sum of the smoking risk value within the detection cycle and all the historical risk values is calculated, and the obtained sum is the smoking risk value within the detection cycle. Correspondingly, the total risk value of the wire to be monitored is the smoking risk value within the detection cycle. In a case where the current detection cycle is not the first detection cycle, it indicates that there is currently a detection cycle prior to the current detection cycle, that is, there is at least one historical risk value, and the historical risk value is not 0. Therefore, the smoking risk value within the detection cycle and all the historical risk values are accumulated. Correspondingly, the total risk value of the wire to be monitored is the sum of smoking risk values of all detection cycles up to the current moment. In the embodiments of the present invention, the smoking risk value within each detection cycle may be regarded as a risk component corresponding to the detection cycle. The risk component corresponding to the detection cycle is related to the corresponding smoking time in a case where a current of the current value within the detection cycle is supplied to the wire to be monitored. Therefore, the risk component corresponding to the detection cycle may also be referred to as a time component Δt corresponding to the detection cycle, and the smoking risk function may also be referred to as a smoking time function. The total risk value may be denoted as ∑t = Δt(n) + Δt(n-1) + ... + Δt(1). Δt(n) denotes a smoking risk value corresponding to the n-th detection cycle.

In the embodiments of the present invention, the smoking risk value is taken as a risk metric of the smoking event occurring within the detection cycle. The smoking risk values within the detection cycle and all the historical detection cycles are accumulated to be taken as the total risk value of the wire to be monitored, such that the total risk value may accurately represent a currently accumulated overall risk metric of the wire to be monitored. Thus, a power-off operation may be performed subsequently on the wire to be monitored in time based on the total risk value, thereby achieving protection for the wire to be monitored.

In step 104, a power-off operation is performed on the wire to be monitored in a case where the total risk value meets a preset value requirement.

In the embodiments of the present invention, the preset value requirement may be set as needed. For example, the preset value requirement may include that the total risk value is not less than 1, or the total risk value is not less than 0.9, which is not limited in the embodiments of the present invention. In a case where the total risk value meets the preset value requirement, it may be determined that the currently accumulated overall risk of the wire to be monitored has reached a risk upper limit, and the wire to be monitored currently meets a smoking condition, i.e., is about to smoke and catch fire. For example, the wire may smoke and catch fire in 30 seconds to 1 minute. Therefore, the power-off operation may be performed on the wire to be monitored, that is, the current of the wire to be monitored is cut off, to avoid the problem that the wire to be monitored smokes and catches fire due to overcurrent, thereby ensuring vehicle safety.

In summary, in the method for protecting the wire provided by the embodiments of the present invention, for any wire to be monitored, a current value of the wire to be monitored within a current detection cycle is obtained as a target current value. Then, a smoking risk value of the wire to be monitored within the detection cycle is generated based on the target current value and a preset smoking risk function. The smoking risk function is obtained by fitting based on test current values of different wires and corresponding smoking risk test values. Each of the smoking risk test values is determined based on a smoking time, and the smoking time is a time needed for a smoking event to occur in a case where a current of the test current value passes through the wire. A total risk value of the wire to be monitored is determined based on the smoking risk value within the detection cycle and a historical risk value. The historical risk value includes a smoking risk value of the wire to be monitored within a detection cycle prior to the detection cycle. A power-off operation is performed on the wire to be monitored in a case where the total risk value meets a preset value requirement. In this way, it is estimated, based on the preset smoking risk function, whether the total risk value of the wire to be monitored meets the preset value requirement, and the power-off operation is performed on the wire to be monitored in a case where the preset value requirement is met. Since protection for a wire may be achieved without arranging a fuse, the space in the vehicle body may be saved, and the manufacturing cost of the vehicle may be reduced.

In addition, since the smoking risk function is obtained by fitting based on the test current values actually passing through the wires and the smoking risk test values determined from the time needed for the smoking event of the wires to actually occur, it may be ensured that the smoking risk value determined using the smoking risk function may accurately represent a risk probability of the smoking event occurring, and thereby it may be ensured that subsequently the power-off operation may be performed on the wire to be monitored in time, which avoids the problem that the wire to be monitored smokes and catches fire.

Optionally, after step 103, the embodiments of the present invention may further include the following step. In a case where the total risk value does not meet the preset value requirement, the step of obtaining the current value of the wire to be monitored within the current detection cycle as the target current value is performed again when a next detection cycle is reached.

In the embodiments of the present invention, in a case where the total risk value does not meet the preset value requirement, it may be determined that the currently accumulated overall risk of the wire to be monitored does not reach the risk upper limit. Therefore, the wire to be monitored continues to be monitored. Specifically, in a case where the next detection cycle is reached, i.e., in a case where the current detection cycle turns into the reached next detection cycle, step 101 may be performed again. For example, the detection cycle is 500 milliseconds. In such a case, the operations of obtaining the current value of the wire to be monitored as the target current value, determining the smoking risk value based on the target current value, and determining the total risk value based on the smoking risk value and the historical risk value may be performed once every 500 milliseconds. The power-off operation is performed on the wire to be monitored in a case where the current total risk value meets the preset value requirement. Conversely, in a case where the current total risk value does not meet the preset value requirement, 500 milliseconds after the current detection cycle, the foregoing operations of obtaining the current value of the wire to be monitored as the target current value, determining the smoking risk value based on the target current value, and determining the total risk value based on the smoking risk value and the historical risk value may be performed again. In addition, it is determined again whether the current total risk value meets the preset value requirement. In this way, a smoking risk value within a subsequent detection cycle may continue to be determined in a case where the total risk value does not meet the preset value requirement, and the accumulated total risk value of the wire to be monitored is calculated again until the total risk value meets the preset value requirement. Of course, monitoring of the wire to be monitored may also be stopped in a case where a stop instruction is received or another preset stop condition is met, which is not limited in the embodiments of the present invention.

In the embodiments of the present invention, in a case where the total risk value does not meet the preset value requirement, the current value of the wire to be monitored continues to be detected in accordance with the detection cycle, the smoking risk value of the wire to be monitored within the detection cycle is determined based on the preset smoking risk function, and the total risk value of the wire to be monitored is determined based on the smoking risk values within the detection cycle and the previous detection cycles, such that the risk of the smoking event of the wire to be monitored occurring may be dynamically evaluated. In this way, the moment at which the accumulated risk of the wire to be monitored reaches the risk upper limit may be monitored in time, thereby ensuring that the current of the wire to be monitored may be cut off in time.

Optionally, in an embodiment, the foregoing step of generating, based on the target current value and the preset smoking risk function, the smoking risk value of the wire to be monitored within the detection cycle may specifically include steps 1021 to 1023.

In step 1021, a target coefficient corresponding to a wire gauge of the wire to be monitored is obtained. The target coefficient is a function coefficient obtained from a coefficient set of the smoking risk function, and the coefficient set includes function coefficients corresponding to different wire gauges.

In step 1022, the target current value and the target coefficient are input into the smoking risk function.

In step 1023, the smoking risk value of the wire to be monitored within the detection cycle is obtained by obtaining an output of the smoking risk function.

In the embodiments of the present invention, the coefficient set of the smoking risk function may be pre-generated and stored in the target VIU. The coefficient set may include a plurality of groups of function coefficients corresponding to different wire gauges. Each group of function coefficients includes coefficients of the same type. The target coefficient corresponding to the wire gauge of the wire to be monitored may be first determined based on the wire gauge of the wire to be monitored and the coefficient set. Specifically, a wire gauge corresponding to the wire ID of the wire to be monitored may be found based on a corresponding relationship between wire IDs and wire gauges stored in the target VIU, and taken as the wire gauge of the wire to be monitored. Then, the wire gauge of the wire to be monitored is matched against the wire gauges corresponding to the groups of function coefficients in the coefficient set. A function coefficient corresponding to the matched wire gauge is determined as the target coefficient. Correspondingly, the step of determining, based on the wire gauge of the wire to be monitored and the coefficient set, the target coefficient corresponding to the wire gauge of the wire to be monitored may be performed in a case where the smoking risk value is calculated for the wire to be monitored for the first time, and when the smoking risk value of the wire to be monitored is calculated again subsequently, the previously determined target coefficient may be directly reused, thereby saving processing resources. In other words, in a case where step 1021 is performed for the first time, the target coefficient corresponding to the wire gauge of the wire to be monitored may be determined based on the wire gauge of the wire to be monitored and the coefficient set. In a case where step 1021 is performed again subsequently, the previously determined target coefficient may be directly read. Of course, the operation of determining the target coefficient corresponding to the wire gauge of the wire to be monitored based on the wire gauge of the wire to be monitored and the coefficient set may also be performed every time the smoking risk value of the wire to be monitored is calculated. That is, the target coefficient corresponding to the wire gauge of the wire to be monitored is determined based on the wire gauge of the wire to be monitored and the coefficient set every time to obtain the target coefficient, which is not limited in the embodiments of the present invention.

Further, during calculation of the smoking risk value of the wire to be monitored within the detection cycle, a value of each function coefficient in the smoking risk function may be set to a specific value represented by the target coefficient, and the target current value may be taken as an independent variable of the smoking risk function. The smoking risk value of the wire to be monitored within the detection cycle is calculated based on the smoking risk function.

The time needed for the smoking event to occur usually varies in a case where the same currents pass through wires with different wire gauges. In addition, the wire gauge affects thermal accumulation. Therefore, in the embodiments of the present invention, function coefficients corresponding to different wire gauges are provided. In a case where the smoking risk value of the wire to be monitored is calculated using the smoking risk function, a function coefficient corresponding to the wire gauge of the wire to be monitored is taken as the target coefficient, and the smoking risk value of the wire to be monitored within the current detection cycle is calculated in combination with the target current value and the target coefficient. In this way, the adaptability between the calculated smoking risk value and the wire to be monitored may be enhanced, thereby improving the accuracy of the smoking risk value generated for the wire to be monitored.

Optionally, in an implementation, the function coefficient of the smoking risk function may include a thermal rise coefficient, a heat dissipation coefficient, and an offset coefficient. Correspondingly, the target coefficient includes a thermal rise coefficient, a heat dissipation coefficient, and an offset coefficient corresponding to the wire gauge of the wire to be monitored. The step of inputting the target current value and the target coefficient into the smoking risk function may specifically include steps 1022a and 1023b.

In step 1022a, a function model corresponding to the smoking risk function is loaded.

In step 1023b, the target current value, the thermal rise coefficient, the heat dissipation coefficient, and the offset coefficient are input into the function model corresponding to the smoking risk function.

The function model corresponding to the smoking risk function may be in a preset function form. The function form may be set according to a current value feature with a variance explained ratio of the smoking risk value meeting a preset explained ratio requirement. The current value feature may be obtained by changing the test current value. For example, in an implementation, the function model corresponding to the smoking risk function may be denoted as: $A * I {\left(n\right)}^{2} + B / I \left(n\right) + C .$

I(n) denotes a target current value within the n-th sampling period, A denotes the thermal rise coefficient, B denotes the heat dissipation coefficient, and C denotes the offset coefficient. In a case where the smoking risk value of the wire to be monitored within the current detection cycle is determined using the smoking risk function, the values of A, B, and C are set to specific values of the coefficients included in the target coefficient.

Specifically, the thermal rise coefficient may be configured to denote a temperature rise capability of the wire as the current value increases, and correspondingly, A*I(n)² may denote a thermal effect generated when the current I passes through the wire. The heat dissipation coefficient may denote a heat dissipation capability of the wire, and correspondingly, B/I(n) may denote a heat dissipation effect of the wire. The offset coefficient may be an introduced random value for counteracting errors caused by noise, such that the smoking risk function may better fit actual data. The heat dissipation coefficient and the offset coefficient may both be negative numbers to ensure that B/I(n) calculated based on the heat dissipation coefficient in the smoking risk function may counteract A*I(n)² calculated based on the thermal rise coefficient. A result of A*I(n)²+B/I(n) may denote that the heat in the wire rises or drops. In addition, it is ensured that the offset coefficient may mitigate errors caused by noise.

Further, the thermal rise coefficient, the heat dissipation coefficient, and the offset coefficient in the target coefficient may be respectively taken as the values of A, B, and C in the foregoing formula, and the target current value is taken as the value of I(n) in the foregoing formula. A calculation result of the formula is the smoking risk value of the wire to be monitored within the current detection cycle. FIG. 2 is a schematic diagram of processing a smoking risk value provided by an embodiment of the present invention. As shown in FIG. 2, for the target current value within the n-th sampling period, a smoking risk value Δt(n) within the n-th sampling period may be calculated. Then, the smoking risk value Δt(n) within the n-th sampling period and the historical risk values, i.e., Δt(n-1), ..., and Δt(1), are accumulated to obtain the total risk value: ∑t = Δt(n) + Δt(n-1) + ... + Δt(1).

In the embodiments of the present invention, the function model corresponding to the smoking risk function is loaded, and the target current value and the thermal rise coefficient, the heat dissipation coefficient, and the offset coefficient in the target coefficient are input into the function model corresponding to the smoking risk function, such that the smoking risk value of the wire to be monitored within the current detection cycle may be conveniently obtained. In this way, the generation efficiency of smoking risk values may be ensured to some extent.

Optionally, in an implementation, the foregoing smoking risk function may be obtained by fitting by the following steps S21 to S24.

In step S21, at least two current values are selected as test current values, and wires with at least two different wire gauges are selected as test wires.

In step S22, for any test current value, a time for the smoking event to occur in a case where a current of the test current value passes through each of the test wires is determined as a smoking time corresponding to the test current value.

In step S23, a reciprocal of the smoking time corresponding to each of the test current values is taken as a smoking risk test value corresponding to the test current value, and a fitting data point is generated based on the test current value and the smoking risk test value corresponding to the test current value.

In step S24, the smoking risk function is obtained by performing function fitting based on the fitting data points.

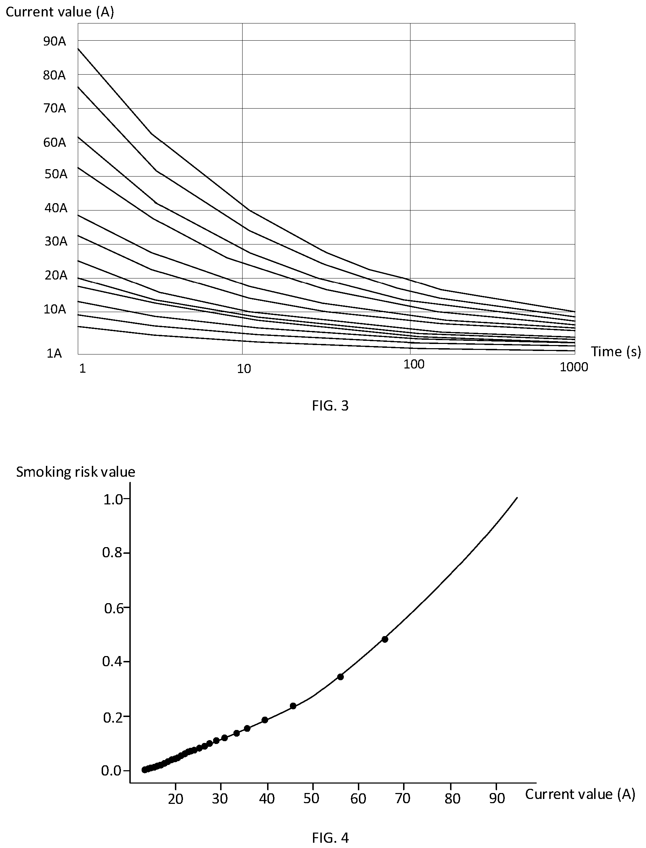

In the embodiments of the present invention, an overload current of the test wire is selected as the test current value. Different test current values may be applied to the test wire at different ambient temperatures respectively until the smoking event of the test wire occurs. In such a case, a time needed from the moment at which the test current value is applied to the moment at which the smoking event of the test wire occurs is recorded as the smoking time corresponding to the test current value. In this way, a plurality of raw data pairs (test current value and smoking time) may be obtained. The ambient temperature may be selected according to an actual situation. For example, 23°C, 40°C, 50°C, 70°C, 85°C, and 100°C may be selected as the ambient temperatures during testing. Experiments are performed at different ambient temperatures of 23°C, 40°C, 50°C, 70°C, 85°C, and 100°C respectively. The wire gauge of the test wire may be set according to an actual situation. For example, wires with 12 wire gauges may be selected as test wires. During testing, a stable current may be output to the test wire by regulating a load. It is to be noted that, in the embodiments of the present invention, for a test wire with any wire gauge, the test wire may be tested a plurality of times using every test current value at the same ambient temperature, that is, a plurality of smoking times may be obtained for one test current value. Correspondingly, the test current value and a median of the plurality of smoking times may be combined into a raw data point. In this way, the impact of noise may be blocked, and the accuracy of data may be improved. FIG. 3 is a schematic diagram of curves corresponding to raw data points provided by an embodiment of the present invention. As shown in FIG. 3, raw data points obtained by testing test wires with 12 different wire gauges are drawn, and curves corresponding to the test wires with 12 different wire gauges in FIG. 3 may be obtained. The horizontal coordinate represents the smoking time, and the vertical coordinate represents the current value of the test current. The wire gauges corresponding to the curves from top to bottom sequentially decrease. Corresponding to the same current value, a larger wire gauge indicates a usually longer needed smoking time. Further, it may be learned based on FIG. 3 that the smoking time is basically negatively correlated with the current.

It is to be noted that, in the embodiments of the present invention, before the raw data points are used, the raw data points may be cleaned first to extract valid data. For example, the raw data points may be analyzed based on a preset program to determine raw data points with a deviation degree greater than a preset deviation degree threshold, and these raw data points are eliminated. The remaining raw data points are valid data. The preset program may be a program based on the Python language. The subsequent operation of generating the smoking risk function based on the raw data points may also be implemented by a preset program. In this way, in a case where there are newly collected raw data points subsequently, the newly collected raw data points may be directly input into the preset program. The preset program optimizes the previously generated smoking risk function in combination with the newly collected raw data points. In this way, the development procedure may be simplified, and the development efficiency may be improved.

The smoking time t in the raw data points may be set to a reciprocal 1/t of the smoking time, thereby obtaining fitting data points. The reciprocal 1/t of the smoking time is the smoking risk test value. In this way, the smoking risk value Δt output by the smoking risk function obtained by fitting based on the fitting data points may denote the reciprocal of the smoking time. Correspondingly, 1/Δt may denote the time needed for the smoking event of the wire to be monitored to occur after the current of the target current value passes through the wire to be monitored. A smaller smoking time indicates a larger corresponding reciprocal and correspondingly indicates a larger represented risk value. Since the current value in an actual environment usually changes, the reciprocal of the smoking time, as a dimensionless metric, may eliminate the impact of the time unit. In this way, the subsequent calculation of the total risk value of the wire to be monitored via accumulation may be facilitated.

Further, the function model may be first determined based on the fitting data points, that is, the function form of the smoking risk function is determined. For example, the test current values in the fitting data points may be first changed to obtain current feature data sets of different dimensions. For example, current features, i.e., I³, I², and 1/I, may be calculated based on the test current value I in the fitting data points. In this way, the setting of the current features of different dimensions may facilitate capture of features in data from different current dimensions. Then, a feature matrix A is built based on the current feature data set. The matrix A has a size of N*M. N denotes the number of dimensions of current features. For example, in the foregoing example, N is equal to 3. M denotes a data condition, i.e., the number of the fitting data points. Next, singular value decomposition (SVD) may be performed on the matrix A to obtain an orthogonal matrix VT of the matrix A. The size of the matrix VT may be N*N. A variance explained ratio of each current feature dimension in the matrix A on a specified target may be calculated from the matrix VT. The specified target may be the smoking risk test value, and the specified target may be selected according to experience or a plurality of experiments. Finally, current features with a sum of variance explained ratios greater than a preset variance explained ratio threshold may be selected, and these selected current features are added to determine the function model. Assuming that the selected current features are I² and 1/I, the function model may be A*I²+B/I+C.

In the embodiments of the present invention, at least two current values are selected as the test current values, and the wires with at least two different wire gauges are selected as the test wires. For any test current value, the time for the smoking event to occur in a case where the current of the test current value passes through each of the test wires is determined to obtain the smoking time corresponding to the test current value. The reciprocal of the smoking time corresponding to each of the test current values is taken as the smoking risk test value corresponding to the test current value, and the fitting data point is generated based on the test current value and the smoking risk test value corresponding to the test current value. The function fitting is performed based on the fitting data points to obtain the smoking risk function. In this way, the function fitting is performed using the fitting data points collected in an actual scenario in which different test current values pass through the test wires with different wire gauges, such that the comprehensiveness of data may be ensured to some extent, and thereby the accuracy of the smoking risk function obtained by fitting may be ensured to some extent.

It is to be noted that the foregoing step of obtaining the smoking risk function by fitting may be performed before step 101. Specifically, the smoking risk function may be obtained by performing once the step of obtaining the smoking risk function by fitting. Subsequently, the smoking risk function may be used a plurality of times. The step of obtaining the smoking risk function by fitting may be performed by a wire protection component, or may be performed by another subject. Correspondingly, after another subject obtains the smoking risk function by fitting in accordance with the foregoing step of obtaining the smoking risk function by fitting, the smoking risk function may be stored in the wire protection component, which is not limited in the embodiments of the present invention. Further, in the embodiments of the present invention, after the smoking risk function is obtained by fitting, the smoking risk function may be further verified. Specifically, after the function fitting is completed, at least two groups of current values other than the test current values may be selected as verification current values to perform testing again, to determine a smoking risk value corresponding to each verification current value as a first risk value. Then, a smoking risk value corresponding to the verification current value is determined using the smoking risk function obtained by fitting as a second risk value. A result error is calculated based on the first risk value and the second risk value. In a case where the result error is less than a preset threshold, it is determined that the smoking risk function is verified, or otherwise, it is determined that the smoking risk function fails to be verified. The preset threshold may be set according to an actual requirement. For example, the preset threshold may be 0.5. In a specific verification process, verification may further be performed in a form of changing a current. For example, the current may be increased from 5 A to 15 A in equal steps within 30 seconds, or the current is controlled to fluctuate randomly within a range from 10 A to 20 A, and the first risk value determined according to the actual data and the second risk value predicted by the smoking risk function are compared to obtain a deviation degree. FIG. 4 is a comparison diagram of data provided by an embodiment of the present invention. As shown in FIG. 4, the horizontal coordinate represents the current value, and the vertical coordinate represents the smoking risk value. The curve in the figure is a curve representation of the smoking risk function. The origins in FIG. 4 represent the actual data, i.e., represent data points formed by the verification current values and the corresponding first risk values. As shown in FIG. 4, the maximum errors between the actual data and the predicted data of the function are all less than the preset threshold, and the fitting effect of the smoking risk function is accurate.

The actual environment of the vehicle is very complex, and errors tend to continuously accumulate due to noise during calculation, which results in a large deviation between the final result and the actual data. In the embodiments of the present invention, the test wires with different wire gauges are extensively tested, and function fitting is performed according to actual data obtained by the tests, to obtain a function relationship between the current value and the smoking risk value by fitting. The impact of noise may be better explored and blocked by calculation using the smoking risk function. In addition, when the smoking risk value within each detection cycle is determined using the smoking risk function, calculation is merely performed based on data within the detection cycle, for example, current values within the detection cycle. The smoking risk value within the detection cycle does not rely on data within the previous detection cycles and smoking risk values calculated within the previous detection cycles, that is, calculations are independent of each other. Therefore, accumulation of errors may be avoided to some extent, and thereby the accuracy of smoking risk values may be improved.

Optionally, in an implementation, the coefficient set may be calculated by the following steps S31 and S32.

In step S31, a vehicle temperature and a wire gauge set of a vehicle are obtained in a case where the vehicle is started. The wire gauge set includes wire gauges of all wires to be monitored.

In step S32, the coefficient set is obtained by generating function coefficients corresponding to the wire gauges according to the vehicle temperature and the wire gauge set.

Specifically, for any target VIU, in a case where it is detected that the vehicle enters a start stage, the wire gauges of all the wires to be monitored assigned to the target VIU may be loaded from a preset buffer to obtain the wire gauge set. In addition, the vehicle temperature detected by a preset vehicle body temperature sensor is obtained. The vehicle temperature may be regarded as an initial wire temperature. The wire gauges of all the wires to be monitored assigned to the target VIU may be stored correspondingly to the wire IDs of all the wires to be monitored assigned to the target VIU. The preset buffer may be a region configured to store software and hardware configuration information of the vehicle. For example, the preset buffer may be configured to store unchangeable configuration information of the vehicle. The preset buffer may still retain data after the vehicle is powered off. In this way, it may be ensured that data in the preset buffer may be read out again after the vehicle is powered on. In the embodiments of the present invention, after the vehicle is started, the wire protection function may be enabled, that is, the target current value is obtained once at intervals of one detection cycle after the vehicle is started, such that the smoking risk value is determined based on the target current value, and the total risk value is determined based on the smoking risk value calculated the current time.

For any wire gauge in the wire gauge set, a function coefficient corresponding to the wire gauge may be generated based on the wire gauge and the vehicle temperature, thereby achieving parameter initialization of the smoking risk function. Function coefficients corresponding to all wire gauges in the wire gauge set form the coefficient set of the smoking risk function. In the embodiments of the present invention, in a case where the vehicle is started, the vehicle temperature and the wire gauge set of the vehicle are obtained, and the function coefficients corresponding to the wire gauges are generated according to the vehicle temperature and the wire gauge set to obtain the coefficient set. Since the wire gauge set includes the wire gauges of all the wires to be monitored, in this way, it may be ensured that wires that need to be monitored are covered, thereby ensuring that subsequently the target coefficients of all the wires to be monitored may be determined based on the coefficient set.

Optionally, in an implementation, the foregoing step of generating the function coefficients corresponding to the wire gauges according to the vehicle temperature and the wire gauge set may specifically include steps S321 to S323.

In step S321, for any wire gauge in the wire gauge set, a thermal rise coefficient corresponding to the wire gauge is obtained by inputting the vehicle temperature and the wire gauge into a first preset formula.

In step S322, a heat dissipation coefficient corresponding to the wire gauge is obtained by inputting the vehicle temperature and the wire gauge into a second preset formula .

In step S323, an offset coefficient corresponding to the wire gauge is obtained by inputting the wire gauge into a third preset formula.

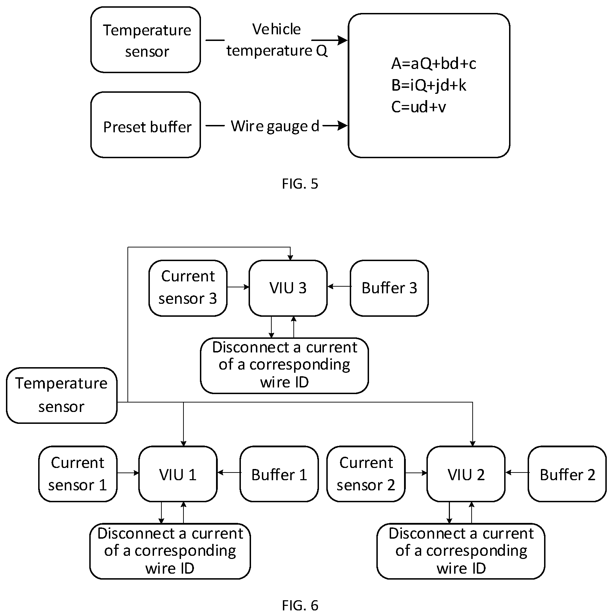

In the embodiments of the present invention, the thermal rise coefficient and the heat dissipation coefficient may be coefficients determined according to the vehicle temperature and the wire gauge. The offset coefficient may be a coefficient that is merely related to the wire gauge. The first preset formula may be A = aQ + bd + c, the second preset formula may be B = iQ + jd + k, and the third preset formula may be C = ud + v. Q denotes the vehicle temperature, d denotes the wire gauge, and a, b, c, i, j, k, u, and v denote preset coefficient obtaining parameters. v may be a noise value determined according to experience. For example, 10 groups of noise values may be determined as a value set of v. FIG. 5 is a schematic diagram of obtaining data provided by an embodiment of the present invention. As shown in FIG. 5, the vehicle temperature Q may be obtained based on a temperature sensor, and the wire gauge d in the wire gauge set may be obtained based on the preset buffer. A function coefficient corresponding to the wire gauge d is calculated based on the vehicle temperature Q, the wire gauge d, the first preset formula of A = aQ + bd + c, the second preset formula of B = iQ + jd + k, and the third preset formula of C = ud + v.

The coefficients a, b, c, i, j, and k in the first preset formula and the second preset formula may be obtained by performing an operation on the actual data using a nonlinear least square method. For example, for any test wire, the wire gauge of the test wire and an ambient temperature corresponding to a fitting data point generated based on the test wire may be recorded. The ambient temperature corresponding to the fitting data point refers to an ambient temperature of the test wire when a raw data point corresponding to the fitting data point is collected. The coefficient A, coefficient B, and coefficient C in the function model are determined using a plurality of fitting data points generated based on the test wire and the previously determined function model. For example, the coefficients may be determined based on the nonlinear least square method. Specifically, the values of A and B may be determined first, and then the coefficient C is determined according to the smoking risk test value in the fitting data point and a value that is obtained by introducing the values of A and B and an actual current value in the fitting data point into the function model. Further, a first data group (wire gauge of the test wire, ambient temperature, A) for determining the coefficients in the first preset formula, a second data group (wire gauge of the test wire, ambient temperature, B) for determining the coefficients in the second preset formula, and a third data group (wire gauge of the test wire, C) for determining the coefficient u in the third preset formula may be generated. Corresponding to the test wires with different wire gauges, a plurality of first data groups, a plurality of second data groups, and a plurality of third data groups may be obtained. Correspondingly, by the nonlinear least square method, the coefficients a, b, and c in A = aQ + bd + c may be determined based on the plurality of first data groups, and the coefficients i, j, and k in B = iQ + jd + k may be determined based on the plurality of second data groups.

For the offset coefficient C, since C is merely related to the wire gauges and the specifications of the wire gauges are discrete, reverse operation may be performed on the actual data to obtain a plurality of usable values. Specifically, C in each of the third data groups may be divided by the wire gauge of the test wire in the third data group to obtain a plurality of usable values of u. When the offset coefficient is calculated using the third preset formula, one value may be randomly selected from the plurality of usable value as u, and one value may be randomly selected from the value set of v as n.

In the embodiments of the present invention, the thermal rise coefficient and the heat dissipation coefficient are calculated in a targeted manner for different wire gauges according to the vehicle temperature and the wire gauge using the first preset formula and the second preset formula respectively. In addition, the offset coefficient is calculated in a targeted manner for different wire gauges according to the wire gauge using the third preset formula. In this way, it may be ensured that during subsequent calculation of the smoking risk value of the function to be monitored, the used function coefficients better fit the function to be monitored, thereby improving the calculation effect.

Optionally, in an embodiment, step S41 may be further included. In step S41, a protection level of the wire to be monitored is determined.

Correspondingly, the step of performing the power-off operation on the wire to be monitored may specifically include steps 1041 and 1042.

In step 1041, the power-off operation is performed on the wire to be monitored directly in a case where the protection level is a first level.

In step 1042, disconnection prompt information is output to a user in a case where the protection level is a second level, and the power-off operation is performed on the wire to be monitored in a case where a time interval from a target time point reaches preset duration. The target time point is a time point at which the disconnection prompt information is output.

In the embodiments of the present invention, the protection level of the wire to be monitored may be preset for the wire to be monitored according to an actual requirement. The power-off operations corresponding to different protection levels have different execution timeliness. Specifically, in an implementation, the protection level may include the first level and the second level. The first level may be higher than the second level. Correspondingly, the power-off operation may be performed on the wire to be monitored directly in a case where the protection level of the wire to be monitored is the first level. In this way, the problem that the wire to be monitored smokes and catches fire may be minimized. For example, a first protection level may be set for the wire in a case where the normal driving function of the vehicle is not affected after the wire to be monitored is powered off. Conversely, in a case where the protection level of the wire to be monitored is the second level, the disconnection prompt information may be output to the user first, such that the user may learn in time that the wire to be monitored is about to be powered off, and may take timely countermeasures. It is ensured that the user may perform valid control on the vehicle, avoiding the problem that the power-off operation is directly performed to cause abrupt interruption of the driving of the vehicle, which reduces safety of the vehicle. For example, the disconnection prompt information may include function information for representing functions where the user's usage is affected after the wire to be monitored is powered off, and time information that represents the preset duration. For example, the driving function of the vehicle is affected after the wire to be monitored is disconnected, and the preset duration is 30 seconds. In such a case, the disconnection prompt information may be displayed by the center console display of the vehicle: Wire overcurrent detected. Wire current will be cut off in 20 seconds, affecting driving function of vehicle, please pull over immediately. Correspondingly, a time point at which the disconnection prompt information is output may be used as the target time point to start countdown. The power-off operation is performed on the wire to be monitored after 30-second countdown ends. Specifically, the power-off operation may be performed on the wire to be monitored based on a wire continuity service. The wire continuity service may receive and execute a continuity request for the wire. A wire disconnection request may be sent to disconnect the current of the wire to be monitored by the wire continuity service. The wire continuity service may be provided by an electronic control unit responsible for controlling currents, for example, provided by a power management system. For example, in a case where the total risk value of the wire to be monitored meets a preset risk requirement, a disconnection request carrying the wire ID of the wire to be monitored may be sent to cut off the current supply corresponding to the wire ID of the wire to be monitored. The wire continuity service may return response information representing a disconnection success after the current supply is successfully cut off. Conversely, in a case where the current supply fails to be cut off, response information representing a disconnection failure may be returned, such that the target VIU correspondingly performs processing. For example, the target VIU may directly send a disconnection instruction again until disconnection succeeds.

It is to be noted that, in the embodiments of the present invention, in a case where a current is conducted for the wire to be monitored subsequently, the current may be further conducted for the wire to be monitored based on the wire continuity service. Compared with the manner of arranging a fuse, after the fuse blows, a new fuse needs to be replaced for reconnection. In the embodiments of the present invention, after a protection operation is performed on the wire, that is, the wire is powered off, in a case where the power needs to be reconnected, the power may be directly connected based on the wire continuity service, such that subsequent costs may be reduced. In addition, in the embodiments of the present invention, overcurrent protection for the wire may be achieved based on the wire protection function, such that during selection of a wire gauge for the vehicle, a smaller wire gauge may be selected without concern about current-carrying capacity, thereby further reducing the manufacturing costs.

In the embodiments of the present invention, the protection level of the wire to be monitored is obtained. The power-off operation is performed on the wire to be monitored directly in a case where the protection level of the wire to be monitored is the first level, which may minimize the problem that the wire to be monitored smokes and catches fire. In a case where the protection level of the wire to be monitored is the second level, the disconnection prompt information may be output to the user first, such that the user may learn in time that the wire to be monitored is about to be powered off, and may take timely countermeasures, avoiding the problem that the power-off operation is directly performed to cause abrupt interruption of the driving of the vehicle, which thereby reduces safety of the vehicle.

Optionally, in an embodiment, the foregoing step of determining the protection level of the wire to be monitored may specifically include the following steps. A wire identity of the wire to be monitored is obtained as a target identity. The protection level of the wire to be monitored is obtained by searching for, from a preset corresponding relationship between wire identities and protection levels, a protection level corresponding to a wire identity corresponding to the target identity. In this implementation, the preset corresponding relationship between wire identities and protection levels may be preset according to an actual requirement. The corresponding relationship may be stored in the target VIU in advance. The corresponding relationship stored in each target VIU may specifically include wire identities of wires assigned to the target VIU and corresponding protection levels. For any target VIU, the corresponding relationship may be loaded from the preset buffer. Then, the corresponding relationship is searched based on the wire identity of the wire to be monitored. In this way, the corresponding relationship between wire identities and protection levels is set, and the protection level of the wire to be monitored is determined based on the corresponding relationship between wire identities and protection levels, such that different protection levels may be set for different wires, thereby achieving diversified protection for the wire.

Alternatively, in an embodiment, the foregoing step of determining the protection level of the wire to be monitored may specifically include the following steps. A protection level of a wire protection component to which the wire to be monitored belongs is determined. The protection level of the wire protection component is determined as the protection level of the wire to be monitored. The wire protection component to which the wire to be monitored belongs is the target VIU responsible for managing the wire to be monitored. For any target VIU, the protection level set in its preset buffer may be obtained as the protection level of the wire to be monitored. For example, the level of the protection function of the target VIU may be read from the preset buffer after the vehicle is started, to obtain the protection level of the target VIU. In this implementation, the protection levels of all the wires to be monitored managed by the target VIU are the protection level set in the preset buffer of the target VIU. In this way, it is merely necessary to obtain the protection level of the wire protection component to determine the protection level of the wire to be monitored, such that the efficiency of determining the protection level may be improved.

FIG. 6 is a schematic diagram of wire protection provided by an embodiment of the present invention. As shown in FIG. 6, three target VIUs, i.e., VIU 1, VIU 2, and VIU 3, may obtain the vehicle temperature based on the temperature sensor, and obtain, from the respective buffer, protection levels, and wire IDs and wire gauges of the respectively managed wires to be monitored. For example, VIU 1 may obtain, from buffer 1, the protection level, and the wire IDs and wire gauges of the managed wires to be monitored, for example, obtain the protection level 0, [wire ID 1, wire gauge 0.35], [wire ID 2, wire gauge 0.5], ... . VIU 2 may obtain, from buffer 2, the protection level, and the wire IDs and wire gauges of the managed wires to be monitored, for example, obtain the protection level 0, [wire ID 31, wire gauge 0.35], [wire ID 32, wire gauge 0.5], ... . VIU 3 may obtain, from buffer 3, the protection level, and the wire IDs and wire gauges of the managed wires to be monitored, for example, obtain the protection level 0, for example, obtain the protection level 1, [wire ID 51, wire gauge 1.5], [wire ID 52, wire gauge 1.0], ... . In addition, the target VIUs may obtain, based on current sensors responsible for collecting the current values of the respective managed wires to be monitored, current values corresponding to the wire IDs of the managed wires to be monitored. For example, VIU 1 may obtain, from current sensor 1, the current values corresponding to the wire IDs of the managed wires to be monitored, for example, obtain: [wire ID 1, current 5 A], [wire ID 2, current 10 A], ... . VIU 2 may obtain, from current sensor 2, the current values corresponding to the wire IDs of the managed wires to be monitored, for example, obtain: [wire ID 31, current 5 A], [wire ID 32, current 10 A], ... . VIU 3 may obtain, from current sensor 3, the current values corresponding to the wire IDs of the managed wires to be monitored, for example, obtain: [wire ID 51, current 5 A], [wire ID 52, current 10 A], ... . Correspondingly, the target VIUs may calculate the smoking risk values of each of the wire to be monitored within the detection cycles, then calculate the total risk value of the wire to be monitored, and determine whether the total risk value of the wire to be monitored meets the preset risk requirement. In a case the preset risk requirement is met, the current of the wire to be monitored is cut off. The total risk value of the wire to be monitored may be stored correspondingly to the wire ID of the wire to be monitored. Correspondingly, a current of a wire ID corresponding to a total risk value meeting the preset risk requirement may be cut off.

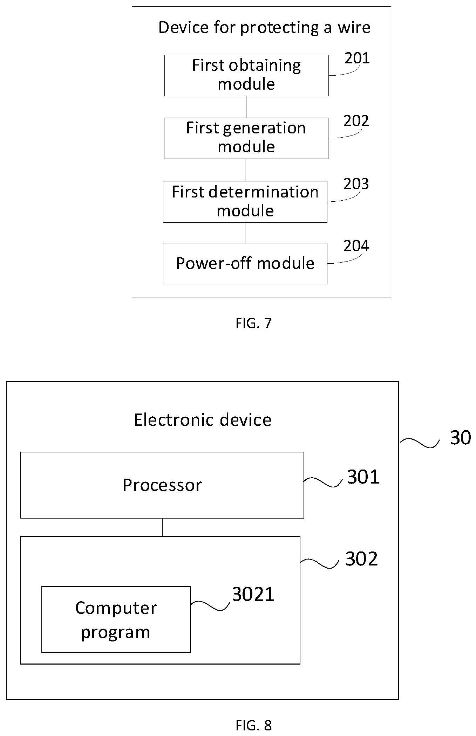

FIG. 7 shows a device for protecting a wire provided by an embodiment of the present invention. As shown in FIG. 7, the device may be applied to any wire protection component. The device for protecting a wire includes a first obtaining module 201, a first generation module 202, a first determination module 203, and a power-off module 204.

The first obtaining module 201 is configured to obtain, for any wire to be monitored, a current value of the wire to be monitored within a current detection cycle as a target current value.

The first generation module 202 is configured to generate, based on the target current value and a preset smoking risk function, a smoking risk value of the wire to be monitored within the detection cycle. The smoking risk function is obtained by fitting based on test current values of different wires and corresponding smoking risk test values, each of the smoking risk test values is determined based on a smoking time, and the smoking time is a time needed for a smoking event to occur in a case where a current of the test current value passes through the wire.

The first determination module 203 is configured to determine, based on the smoking risk value within the detection cycle and a historical risk value, a total risk value of the wire to be monitored. The historical risk value includes a smoking risk value of the wire to be monitored within a detection cycle prior to the detection cycle.

The power-off module 204 is configured to perform a power-off operation on the wire to be monitored in a case where the total risk value meets a preset value requirement.

Optionally, the first generation module 202 is specifically configured to:
obtain a target coefficient corresponding to a wire gauge of the wire to be monitored, where the target coefficient is a function coefficient obtained from a coefficient set of the smoking risk function, and the coefficient set includes function coefficients corresponding to different wire gauges;
input the target current value and the target coefficient into the smoking risk function; and
obtain the smoking risk value of the wire to be monitored within the detection cycle by obtaining an output of the smoking risk function.

Optionally, the target coefficient includes a thermal rise coefficient, a heat dissipation coefficient, and an offset coefficient. The first generation module 202 is specifically further configured to: load a function model corresponding to the smoking risk function; and input the target current value, the thermal rise coefficient, the heat dissipation coefficient, and the offset coefficient into the function model corresponding to the smoking risk function.

Optionally, the smoking risk function is obtained by fitting using a selection module, a second determination module, a second generation module, and a fitting module.

The selection module is configured to select at least two current values as test current values, and select wires with at least two different wire gauges as test wires.

The second determination module is configured to determine, for any test current value, a time for the smoking event to occur in a case where a current of the test current value passes through each of the test wires as a smoking time corresponding to the test current value.

The second generation module is configured to take a reciprocal of the smoking time corresponding to each of the test current values as a smoking risk test value corresponding to the test current value, and generate a fitting data point based on the test current value and the smoking risk test value corresponding to the test current value.

The fitting module is configured to obtain the smoking risk function by performing function fitting based on the fitting data points.

Optionally, the device further includes a second obtaining module and a third generation module.

The second obtaining module is configured to obtain a vehicle temperature and a wire gauge set of a vehicle in a case where the vehicle is started. The wire gauge set includes wire gauges of all wires to be monitored.

The third generation module is configured to obtain the coefficient set by generating function coefficients corresponding to the wire gauges according to the vehicle temperature and the wire gauge set.

Optionally, the third generation module is specifically configured to:
obtain, for any wire gauge in the wire gauge set, a thermal rise coefficient corresponding to the wire gauge by inputting the vehicle temperature and the wire gauge into a first preset formula;
obtain a heat dissipation coefficient corresponding to the wire gauge by inputting the vehicle temperature and the wire gauge into a second preset formula; and
obtain an offset coefficient corresponding to the wire gauge by inputting the wire gauge into a third preset formula.

Optionally, the device further includes a third determination module. The third determination module is configured to determine a protection level of the wire to be monitored.

The power-off module 204 is specifically configured to:
perform the power-off operation on the wire to be monitored directly in a case where the protection level is a first level; and
output disconnection prompt information to a user in a case where the protection level is a second level, and performing the power-off operation on the wire to be monitored in a case where a time interval from a target time point reaches preset duration. The target time point is a time point at which the disconnection prompt information is output.

Optionally, the third determination module is specifically configured to: obtain a wire identity of the wire to be monitored as a target identity, and obtain the protection level of the wire to be monitored by searching for, from a preset corresponding relationship between wire identities and protection levels, a protection level corresponding to a wire identity corresponding to the target identity; or
determine a protection level of a wire protection component to which the wire to be monitored belongs, and determine the protection level of the wire protection component as the protection level of the wire to be monitored.

Optionally, the device further includes a jump module. The jump module is configured to perform, in a case where the total risk value does not meet the preset value requirement, the step of obtaining the current value of the wire to be monitored within the current detection cycle as the target current value again when a next detection cycle is reached.

Optionally, the first determination module 203 is specifically configured to: calculate a sum of the smoking risk value within the detection cycle and all historical risk values; and determine the sum as the total risk value of the wire to be monitored.

Device embodiments are basically similar to the method embodiments and thus are described briefly. For related parts, reference may be made to partial descriptions in the method embodiments.

Benefits of the device for protecting the wire over the related art are the same as those of the method described in the foregoing embodiments, which are not described here.

An embodiment of the present invention provides an electronic device. Referring to FIG. 8, the electronic device 30 includes a processor 301, a memory 302, and a computer program 3021 stored in the memory 302 and runnable on the processor 301. The processor 301, when executing the program, implements the method for protecting the wire in the foregoing embodiments.

An embodiment of the present invention provides a storage medium. Instructions in the storage medium, when executed by a processor of an electronic device, cause the electronic device to perform the foregoing method.

An embodiment of the present invention provides a vehicle. The vehicle includes the device in the foregoing embodiments and is configured to perform the method in the foregoing embodiments.

Algorithms and displays provided herein are not inherently related to any particular computer, virtual system, or other devices. The structure required for constructing such s system is apparent from the foregoing descriptions. Furthermore, the present invention is not directed to any particular programming language. It is to be understood that various programming languages may be used to implement the content of the present invention described herein, and the foregoing descriptions of particular languages are for the purpose of disclosing the optimal implementation of the present invention.

A large number of specific details are set forth in the specification provided herein. However, it is to be understood that the embodiments of the present invention may be practiced without these specific details. In some examples, common methods, structures, and technologies are not disclosed in detail, so as not to mix up understanding on this specification.

Similarly, it is to be understood that in the foregoing descriptions of examples of the present invention, various features of the present invention are sometimes grouped together in a single embodiment, figure, or description thereof for the purpose of simplifying the present invention and aiding in the understanding of one or more of the various inventive aspects. However, the disclosed method is not to be interpreted as reflecting an intention that the claimed present invention requires more features than those are expressly recited in each claim. More precisely, as reflected by the following claims, inventive aspects lie in being fewer than all features of a single embodiment disclosed above. Therefore, the claims following the Detailed Description are hereby expressly incorporated into the Detailed Description, with each claim standing on its own as a separate embodiment of the present invention.

Those skilled in the art may understand that the modules in the device in the embodiments may be adaptively changed and disposed in one or more devices different from this embodiment. The modules, units, or components in the embodiments may be combined into one module, unit, or component, and furthermore, may be divided into a plurality of sub-modules, sub-units, or subcomponents. Any combination of all features disclosed in this specification (including the accompanying claims, abstract, and drawings), as well as all processes or units of any method or device so disclosed, may be employed, except where at least some of such features and/or processes or units are mutually exclusive. Unless expressly stated otherwise, each feature disclosed in this specification (including the accompanying claims, abstract, and drawings) may be replaced with alternative features providing the same, equivalent, or similar purpose.

The various part embodiments of the present invention may be implemented in hardware, or in software modules running on one or more processors, or in a combination thereof. It is to be understood by those skilled in the art that a microprocessor or a digital signal processor (DSP) may be used in practice to implement some or all functions of some or all parts in the sorting device according to the present invention. The present invention may also be implemented as a device or device program for performing a part or all of the method described herein. Such a program implementing the present invention may be stored in a computer-readable medium, or may be in a form of one or more signals. Such signals may be downloaded from an Internet website, or provided on a carrier signal, or provided in any other form.

It is to be noted that the foregoing embodiments describe the present invention rather than limit the present invention, and that alternative embodiments may be devised by those skilled in the art without departing from the scope of the appended claims. In the claims, any reference sign placed between parentheses shall not be construed as limiting the claims. The word "include" does not exclude the presence of elements or steps not listed in the claims. The word "a" or "one" before an element does not exclude a plurality of such elements. The present invention may be implemented by hardware including several different elements and a suitably programmed computer. In a unit claim enumerating several devices, some of these devices may be specifically embodied by the same hardware item. The use of words such as "first", "second", and "third" does not denote any order. These words may be interpreted as names.

It is to be clearly understood by those skilled in the art that, for the purpose of convenient and brief descriptions, for specific operating processes of the system, device, and unit described above, reference may be made to the corresponding processes in the foregoing method embodiments, which are not described here.

The above are merely preferred embodiments of the present invention, and are not intended to limit the present invention. Any modification, equivalent replacement, improvement, and the like made within the spirit and principles of the present invention shall fall within the scope of protection of the present invention.

The above are merely specific implementations of the present invention, but the scope of protection of the present invention is not limited thereto. Any variation or replacement readily devised by those skilled in the art within the technical scope disclosed in the present invention shall fall within the scope of protection of the present invention. Therefore, the scope of protection of the present invention shall be subject to the scope of protection of the claims.

It is to be noted that the related processes for obtaining various data in the embodiments of the present invention are performed under the premise of complying with the corresponding data protection laws and regulations of the local country, and upon obtaining authorization from the owner of the corresponding device.

The above embodiments are merely preferred embodiments provided to fully illustrate the present invention, and the scope of protection of the present invention is not limited thereto. Any equivalent substitution or modification made by those skilled in the art on the basis of the present invention shall fall within the scope of protection of the present invention.

## Claims

1. A method for protecting a wire, applied to any wire protection component and comprising:
obtaining, for any wire to be monitored, a current value of the wire to be monitored within a current detection cycle as a target current value;
generating, based on the target current value and a preset smoking risk function, a smoking risk value of the wire to be monitored within the detection cycle, wherein the smoking risk function is obtained by fitting based on test current values of different wires and corresponding smoking risk test values, each of the smoking risk test values is determined based on a smoking time, and
the smoking time is a time needed for a smoking event to occur in a case where a current of the test current value passes through the wire;
determining, based on the smoking risk value within the detection cycle and a historical risk value, a total risk value of the wire to be monitored, wherein the historical risk value comprises a smoking risk value of the wire to be monitored within a detection cycle prior to the detection cycle; and
performing a power-off operation on the wire to be monitored in a case where the total risk value meets a preset value requirement.

2. The method according to claim 1, wherein generating, based on the target current value and the preset smoking risk function, the smoking risk value of the wire to be monitored within the detection cycle comprises:
obtaining a target coefficient corresponding to a wire gauge of the wire to be monitored, wherein the target coefficient is a function coefficient obtained from a coefficient set of the smoking risk function, and the coefficient set comprises function coefficients corresponding to different wire gauges;
inputting the target current value and the target coefficient into the smoking risk function; and obtaining the smoking risk value of the wire to be monitored within the detection cycle by obtaining an output of the smoking risk function.

3. The method according to claim 2, wherein the target coefficient comprises a thermal rise coefficient, a heat dissipation coefficient, and an offset coefficient; and
inputting the target current value and the target coefficient into the smoking risk function comprises:
loading a function model corresponding to the smoking risk function; and
inputting the target current value, the thermal rise coefficient, the heat dissipation coefficient,
and the offset coefficient into the function model corresponding to the smoking risk function.

4. The method according to any one of claims 1 to 3, wherein the smoking risk function is obtained by fitting in the following manner:
selecting at least two current values as test current values, and selecting wires with at least two different wire gauges as test wires;
determining, for any test current value, a time for the smoking event to occur in a case where a current of the test current value passes through each of the test wires as a smoking time corresponding to the test current value;
taking a reciprocal of the smoking time corresponding to each of the test current values as a smoking risk test value corresponding to the test current value, and generating a fitting data point based on the test current value and the smoking risk test value corresponding to the test current value; and
obtaining the smoking risk function by performing function fitting based on the fitting data points.

5. The method according to claim 2 or 3, further comprising:
obtaining a vehicle temperature and a wire gauge set of a vehicle in a case where the vehicle is started, wherein the wire gauge set comprises wire gauges of all wires to be monitored; and
obtaining the coefficient set by generating function coefficients corresponding to the wire gauges according to the vehicle temperature and the wire gauge set.

6. The method according to claim 5, wherein obtaining the coefficient set by generating the function coefficients corresponding to the wire gauges according to the vehicle temperature and the wire gauge set comprises:
obtaining, for any wire gauge in the wire gauge set, a thermal rise coefficient corresponding to the wire gauge by inputting the vehicle temperature and the wire gauge into a first preset formula;
obtaining a heat dissipation coefficient corresponding to the wire gauge by inputting the vehicle temperature and the wire gauge into a second preset formula; and
obtaining an offset coefficient corresponding to the wire gauge by inputting the wire gauge into a third preset formula.

7. The method according to any one of claims 1 to 6, further comprising: determining a protection level of the wire to be monitored;
wherein performing the power-off operation on the wire to be monitored comprises:
performing the power-off operation on the wire to be monitored directly in a case where the protection level is a first level; and
outputting disconnection prompt information to a user in a case where the protection level is a second level, and performing the power-off operation on the wire to be monitored in a case where a time interval from a target time point reaches preset duration, wherein the target time point is a time point at which the disconnection prompt information is output.

8. The method according to claim 7, wherein determining the protection level of the wire to be monitored comprises:
obtaining a wire identity of the wire to be monitored as a target identity, and obtaining the protection level of the wire to be monitored by searching for, from a preset corresponding relationship between wire identities and protection levels, a protection level corresponding to a wire identity corresponding to the target identity; or
determining a protection level of a wire protection component to which the wire to be monitored belongs, and determining the protection level of the wire protection component as the protection level of the wire to be monitored.

9. The method according to any one of claims 1 to 8, further comprising:
performing, in a case where the total risk value does not meet the preset value requirement, the step of obtaining the current value of the wire to be monitored within the current detection cycle as the target current value again when a next detection cycle is reached.

10. The method according to any one of claims 1 to 9, wherein determining, based on the smoking risk value within the detection cycle and the historical risk value, the total risk value of the wire to be monitored comprises:
calculating a sum of the smoking risk value within the detection cycle and all historical risk values; and
determining the sum as the total risk value of the wire to be monitored.

11. A device for protecting a wire, applied to any wire protection component and comprising:
a first obtaining module, configured to obtain, for any wire to be monitored, a current value of the wire to be monitored within a current detection cycle as a target current value;
a first generation module, configured to generate, based on the target current value and a preset smoking risk function, a smoking risk value of the wire to be monitored within the detection cycle,
wherein the smoking risk function is obtained by fitting based on test current values of different wires and corresponding smoking risk test values, each of the smoking risk test values is determined based on a smoking time, and the smoking time is a time needed for a smoking event to occur in a case where a current of the test current value passes through the wire;
a first determination module, configured to determine, based on the smoking risk value within the detection cycle and a historical risk value, a total risk value of the wire to be monitored,
wherein the historical risk value comprises a smoking risk value of the wire to be monitored within a detection cycle prior to the detection cycle; and
a power-off module, configured to perform a power-off operation on the wire to be monitored in a case where the total risk value meets a preset value requirement.

12. An electronic device, comprising a processor and a memory, wherein the memory stores a program or instructions runnable on the processor, and the program or instructions, when executed by the processor, implement steps of the method according to any one of claims 1 to 10.

13. A storage medium, wherein instructions in the storage medium, when executed by a processor of an electronic device, cause the electronic device to perform the method according to any one of claims 1 to 10.

14. A vehicle, comprising the device according to claim 11, configured to perform the method according to any one of claims 1 to 10.
